# DEMANDE DE BREVET EUROPEEN

(11) **EP 2 949 499 A2**
(43) Date de publication de la demande: **02.12.2015**
(21) Numéro de dépôt: 15169125.0
(22) Date de dépôt: 26.05.2015
(51) Int. Cl.: B60K 35/00, B60K 37/02, B60R 1/00, G06T 3/40, H04N 7/18, B60W 50/08

(54) **SYSTÈME D'AFFICHAGE POUR VÉHICULE AUTOMOBILE**

(30) Priorité: 27.05.2014 FR 1401216
(71) Demandeur: Valeo Comfort and Driving Assistance, 94046 Créteil Cedex (FR)
(72) Inventeur: Albesa, Bruno, 94046 Créteil Cedex (FR)

(57) **Abrégé**

La présente invention concerne un système d'affichage (10) pour véhicule automobile (1). Le système d'affichage (10) se caractérise en ce qu'il comporte :
- un dispositif d'affichage d'images (101) adapté pour produire une image (102) comportant au moins deux zones d'affichage de taille reconfigurable (1020, 1020'), lesdites zones d'affichage (1020, 1020') étant adaptées pour afficher tout ou partie des informations (Inf) provenant respectivement de deux caméras latérales (11) du véhicule automobile (1) ;
- une unité de contrôle d'affichage (103) adaptée pour reconfigurer la taille d'au moins une zone d'affichage (1020, 1020') en fonction d'un événement prédéterminé (E, E').

## Description

### DOMAINE TECHNIQUE DE L'INVENTION

La présente invention concerne un système d'affichage pour véhicule automobile.

La présente invention concerne également une unité de contrôle d'affichage pour un tel système d'affichage.

La présente invention concerne également un procédé d'affichage adapté pour être mis en oeuvre dans ledit système d'affichage.

Elle trouve une application particulière mais non limitative dans le domaine des véhicules automobiles.

### ARRIÈRE-PLAN TECHNOLOGIQUE DE L'INVENTION

Dans le domaine des véhicules automobiles, il existe un système d'affichage pour véhicule automobile qui permet d'afficher les informations provenant de caméras latérales du véhicule automobile sur deux écrans à l'intérieur de l'habitacle du véhicule automobile, lesdites caméras remplaçant les rétroviseurs latéraux dudit véhicule. Par ailleurs, un écran central est utilisé pour afficher des informations dédiées au multimédia appelées en anglais « infotainment » et de manière classique le tableau de bord du véhicule automobile affiche des informations concernant la vitesse du véhicule, le nombre de tours-minute du moteur, le niveau d'essence etc.

Un inconvénient de cet état de la technique est que ce système d'affichage est complexe et coûteux à mettre en oeuvre. En effet, trois écrans sont utilisés et trois unités de commande sont nécessaires pour contrôler les trois écrans.

### DESCRIPTION GENERALE DE L'INVENTION

A cette fin l'invention propose un système d'affichage pour véhicule automobile selon lequel ledit système d'affichage comporte :
- un dispositif d'affichage d'images adapté pour produire une image comportant au moins deux zones d'affichage de taille reconfigurable, lesdites zones d'affichage étant adaptées pour afficher tout ou partie des informations provenant respectivement de deux caméras latérales du véhicule automobile ;
- une unité de contrôle d'affichage adaptée pour reconfigurer la taille d'au moins une zone d'affichage en fonction d'un événement prédéterminé.

Ainsi, un seul écran est utilisé avec une seule unité de contrôle. Cette solution évite d'ajouter de nouveaux écrans. C'est une solution peu complexe et peu coûteuse.

Selon des modes de réalisation non limitatifs, le système d'affichage peut comporter en outre une ou plusieurs caractéristiques supplémentaires parmi les suivantes.

Selon un mode de réalisation non limitatif, suite à un premier événement prédéterminé, ladite unité de contrôle d'affichage agrandit la taille d'au moins une zone d'affichage.

Selon un mode de réalisation non limitatif, un premier événement prédéterminé est :
- un ordre résultant de la position du regard ; ou
- un déclenchement d'un interrupteur ; ou
- une détection d'un changement de ligne du véhicule automobile ; ou
- une activation d'un clignotant du véhicule automobile ; ou
- un ordre vocal ; ou
- une détection d'un objet sur au moins un coté du véhicule automobile ; ou
- un passage en marche arrière.

Selon un mode de réalisation non limitatif, suite à un deuxième événement prédéterminé, ladite unité de contrôle d'affichage diminue la taille d'au moins une zone d'affichage.

Selon un mode de réalisation non limitatif, un deuxième événement prédéterminé est :
- un ordre résultant de la position du regard ; ou
- une désactivation d'un interrupteur ; ou
- une désactivation d'un clignotant du véhicule automobile ; ou
- un ordre vocal ; ou
- un temps prédéterminé.

Selon un mode de réalisation non limitatif, ledit dispositif d'affichage d'images est :
- un afficheur tête haute et ladite image produite est une image virtuelle ; ou
- un tableau de bord du véhicule automobile et ladite image produite est une image réelle ; ou
- un écran central et ladite image produite est une image réelle.

Selon un mode de réalisation non limitatif, ledit système d'affichage comprend les caméras latérales du véhicule automobile.

Il est également proposé une unité de contrôle d'affichage pour système d'affichage pour véhicule automobile, ledit système d'affichage comportant un dispositif d'affichage d'images adapté pour produire une image comportant au moins deux zones d'affichage de taille reconfigurable, lesdites zones d'affichage étant adaptées pour afficher tout ou partie des informations provenant respectivement de deux caméras latérales du véhicule automobile, ladite unité de contrôle d'affichage étant adaptée pour reconfigurer la taille d'au moins une zone d'affichage en fonction d'un événement prédéterminé.

Selon un mode de réalisation non limitatif, ladite unité de contrôle d'affichage est intégrée dans :
- ledit dispositif d'affichage d'images ; ou
- une desdites caméras latérales.

Il est également proposé un procédé d'affichage pour véhicule automobile comportant :
- l'affichage de tout ou partie des informations provenant de deux caméras latérales du véhicule automobile dans respectivement deux zones d'affichage de taille reconfigurable, lesdites zones d'affichage faisant partie d'une image produite par un dispositif d'affichage d'images ;
- la reconfiguration de la taille d'au moins une zone d'affichage en fonction d'un événement prédéterminé.

### BREVE DESCRIPTION DES FIGURES

L'invention et ses différentes applications seront mieux comprises à la lecture de la description qui suit et à l'examen des figures qui l'accompagnent.
- la **figure 1** représente un véhicule automobile comportant des caméras latérales et un système d'affichage selon un mode de réalisation non limitatif de l'invention ;
- la **figure 2a** représente un schéma d'une image produite par le dispositif d'affichage d'images du système d'affichage de la **figure 1****,** ladite image comportant une première zone d'affichage dont la taille est reconfigurée ;
- la **figure 2b** représente un schéma d'une image produite par le dispositif d'affichage d'images du système d'affichage de la **figure 1****,** ladite image comportant une deuxième zone d'affichage dont la taille est reconfigurée ;
- la **figure 2c** représente un schéma d'une image produite par le dispositif d'affichage d'images du système d'affichage de la **figure 1****,** ladite image comportant deux zones d'affichage dont la taille est reconfigurée ;
- la **figure 3a** représente un dispositif d'affichage d'images du système d'affichage de la **figure 1** intégré dans un véhicule automobile selon un premier mode de réalisation non limitatif ;
- la **figure 3b** représente un dispositif d'affichage d'images du système d'affichage de la **figure 1** intégré dans un véhicule automobile selon un deuxième mode de réalisation non limitatif ;
- la **figure 3c** représente un dispositif d'affichage d'images du système d'affichage de la **figure 1** intégré dans un véhicule automobile selon un troisième mode de réalisation non limitatif ;
- la **figure 4** représente une unité de contrôle d'affichage pour système d'affichage de la **figure 1****,** selon un mode de réalisation non limitatif ;
- la **figure 5** représente un procédé d'affichage adapté pour être mis en oeuvre par le système d'affichage de la **figure 1****.**

### DESCRIPTION DE MODES DE REALISATION DE L'INVENTION

Les éléments identiques, par structure ou par fonction, apparaissant sur différentes figures conservent, sauf précision contraire, les mêmes références.

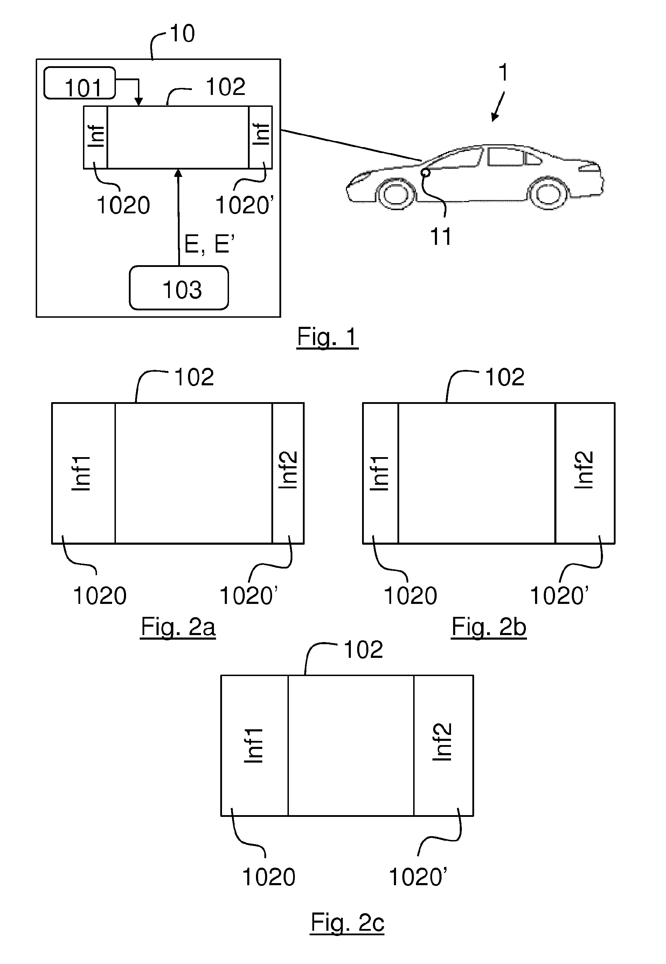

Le système d'affichage 10 pour véhicule automobile 1 est décrit en référence aux **figures 1 à 4****.**

Tel qu'illustré sur la **figure 1****,** un véhicule automobile 1 comporte deux caméras latérales 11 en lieu et place de rétroviseurs latéraux, et un système d'affichage 10. Les caméras latérales 11 capturent des images de l'environnement extérieur au véhicule automobile.

Le système d'affichage 10 comporte :
- un dispositif d'affichage d'images 101 ; et
- une unité de contrôle d'affichage 103.

Dans un mode de réalisation non limitatif (non illustré), le système d'affichage 10 comprend les deux caméras latérales 11.

Le dispositif d'affichage d'images 101 est adapté pour produire une image 102 comportant au moins deux zones d'affichage de taille reconfigurable 1020, 1020'. Les zones d'affichage 1020, 1020' sont adaptées pour afficher tout ou partie des informations Inf provenant respectivement des deux caméras latérales 11 du véhicule automobile 1, à savoir tout ou partie des images capturées par les deux caméras latérales 11. Ainsi, par exemple la zone d'affichage 1020 affiche des informations Inf1 provenant de la caméra latérale gauche 11, tandis que la zone d'affichage 1020' affiche des informations Inf2 provenant de la caméra latérale droite 11.

Par défaut (par exemple au démarrage du véhicule automobile), les informations affichées Inf sont partielles et ne sont composées que d'une partie des informations acquises par les caméras 11 et non pas de toutes les informations acquises. Une partie des informations acquises par les caméras sont ainsi tronquées et non affichées ou encore diminuées en terme de taille pour pouvoir être affichées.

Ainsi, les informations Inf provenant des caméras latérales 11 n'ont pas besoin d'être affichées en totalité. Cela évite de polluer la vision du conducteur du véhicule avec des informations qui sont sans cesse en mouvement, informations correspondant à l'environnement du véhicule sur les côtés dudit véhicule. Le conducteur du véhicule n'a en effet pas besoin d'avoir l'intégralité de ces informations, par exemple lorsqu'il roule en ligne droite.

L'unité de contrôle d'affichage 103 est adaptée pour reconfigurer la taille d'au moins une zone d'affichage 1020, 1020' en fonction d'un événement prédéterminé sélectionné parmi un premier événement E ou un deuxième événement E'.

Dans des modes de réalisation non limitatifs, un premier événement prédéterminé E est :
- 1) un ordre résultant de la position du regard (E1) ; ou
- 2) un déclenchement d'un interrupteur (E2) ; ou
- 3) une détection d'un changement de ligne du véhicule automobile (E3) ; ou
- 4) une activation d'un clignotant du véhicule automobile (E4) ; ou
- 5) un ordre vocal (E5) ; ou
- 6) une détection d'un objet sur au moins un coté du véhicule automobile (E6) ; ou
- 7) un passage en marche arrière E7.

Dans un mode de réalisation, non limitatif, suite audit premier événement prédéterminé E, ladite unité de contrôle d'affichage 103 agrandit au moins une zone d'affichage 1020, 1020'.

Ainsi, dans l'exemple non limitatif de l'événement E1, l'unité de contrôle 103 va par exemple agrandir la taille de la première zone d'affichage 1020 suite à un ordre résultant de la position du regard. Tel qu'illustré sur la figure 2a, la taille de la zone 1020 est agrandie par rapport à sa taille initiale qui correspond à celle de la zone 1020' illustrée.

L'ordre résultant de la position du regard correspond au fait que le conducteur regarde :
- à gauche de l'image réelle 102 affichée par le dispositif d'affichage d'images 101, que ce soit le tableau de bord ou un écran central (ces deux modes de réalisation du dispositif étant décrits plus loin) ;
- à gauche de l'image virtuelle 102 créée par le dispositif d'affichage d'images 101 ou une icône disposée sur ladite image virtuelle (qui est dans ce cas un afficheur tête haute, ce mode de réalisation du dispositif étant décrit plus loin).

Dans ces cas, une caméra infrarouge est utilisée pour la détection du regard et pour informer l'unité de contrôle 103 de la direction du regard. Cette détection peut ainsi se faire également de nuit. On notera qu'une telle détection du regard par infrarouge est appelée en anglais « gaze detection » et est connue de l'homme du métier ;

Dans d'autres exemples non limitatifs, l'unité de contrôle 103 va par exemple agrandir la taille de la première zone d'affichage 1020 suite à :
- l'activation par le conducteur d'un interrupteur, tel que dans un exemple non limitatif un bouton, associé à la première zone d'affichage 1020 (événement E2) ; ou
- la détection d'un changement de ligne si le véhicule automobile change de ligne pour aller sur la gauche (événement E3). Dans ce cas, un système de sortie de voie (appelé en anglais « lane departure system ») connu de l'homme du métier est utilisé pour informer l'unité de contrôle 103 si le véhicule va changer de voie ; ou
- l'activation du clignotant gauche du véhicule automobile (événement E4) ; ou
- un ordre vocal du conducteur « agrandir caméra gauche » (événement E5). Dans ce cas, le véhicule automobile 1 sera équipé d'un capteur vocal ; ou
- une détection d'un objet du côté gauche du véhicule automobile (événement E6). Un tel objet est dans des exemples non limitatifs, un piéton, une voiture, une moto, un poteau etc. ;
- le passage en marche arrière (événement E7) via la boîte de vitesse.

Dans un mode de réalisation non limitatif, la reconfiguration de la zone d'affichage 1020, 1020' peut être fonction d'un événement prédéterminé E, E' et d'une condition supplémentaire qui est dans un exemple non limitatif, la vitesse Vit du véhicule automobile 1.

Dans un mode de réalisation non limitatif, si la condition vitesse Vit inférieure ou égale à 3km/h est vérifiée, alors la reconfiguration de la taille d'au moins une zone d'affichage 1020, 1020' est réalisée. Dans le cas contraire, il n'y a pas de reconfiguration de taille.

Ainsi, on agrandira au moins une zone d'affichage 1020, 1020' lorsque :
- le véhicule roule lentement, par exemple lorsqu'il se gare ou lorsqu'il veut sortir d'une position de stationnement, ou encore lorsque le véhicule est à l'arrêt ; et
- lorsqu'un objet se trouve à côté du véhicule à une certaine distance, et notamment côté de la chaussée où le véhicule se gare, ou côté route lorsqu'il veut sortir de son stationnement.

Au contraire, on n'agrandit pas la ou les zones d'affichage 1020, 1020' lorsque le véhicule est sur l'autoroute et qu'il roule donc rapidement.

Ainsi, de la même manière, tel qu'illustré sur la figure 2b, l'unité de contrôle 103 va par exemple agrandir la taille de la deuxième zone d'affichage 1020' suite :
- à un ordre résultant de la position du regard à droite (événement E1) ; ou
- à l'activation par le conducteur d'un interrupteur, tel que dans un exemple non limitatif un bouton, associé à la deuxième zone d'affichage 1020' (événement E2) ; ou
- à la détection d'un changement de ligne si le véhicule automobile change de ligne pour aller sur la droite (événement E3) ; ou
- à l'activation du clignotant droit du véhicule automobile (événement E4) ; ou
- à un ordre vocal du conducteur « agrandir caméra droite » (événement E5) ; ou
- à une détection d'un objet situé sur au moins un côté droit du véhicule automobile (événement E6) ;
- à un passage en marche arrière (événement E7) ;

Enfin, dans un autre mode de réalisation non limitatif, tel qu'illustré sur la figure 2c, l'unité de contrôle 103 va agrandir la taille des deux zones d'affichage 1020 et 1020', suite :
- à l'activation par le conducteur d'un interrupteur, tel que dans un exemple non limitatif un bouton, associé aux deux zones d'affichage 1020 et 1020' (événement E2) ;
- à un ordre vocal du conducteur « agrandir caméra droite et gauche » dans un exemple non limitatif (événement E5) ;

Ainsi, le fait d'agrandir la ou les tailles des zones d'affichage 1020,1020' permet de faciliter l'affichage des informations Inf provenant des caméras 11 et d'obtenir plus d'informations Inf. On élargit ainsi l'angle de vision du conducteur et sa visibilité par rapport aux informations affichées initialement. En effet, plus d'informations seront affichées, lesdites informations donnant au conducteur une précision plus fine de l'environnement à proximité du véhicule automobile, environnement couvert par l'angle d'ouverture des caméras latérales 11 et correspondant aux images acquises par lesdites caméras.

Les informations affichées sont ainsi gérées dynamiquement sur demande du conducteur du véhicule automobile 1 (ordre du regard, déclenchement interrupteur, ordre vocal) ou automatiquement en fonction d'un événement de conduite particulier du véhicule automobile 1 (changement de ligne, clignotant, détection d'un objet sur un côté du véhicule, passage en marche arrière).

Selon un premier mode de réalisation non limitatif, le dispositif d'affichage d'images 101 est un afficheur tête haute HUD (en anglais « Head Up Display ») et l'image 102 produite par ledit dispositif 101 est une image virtuelle. On rappelle qu'un afficheur tête haute HUD comporte un imageur adapté pour former des images provenant d'un flux vidéo qui transporte des informations telles que la vitesse, les données GPS etc. du véhicule, ces images ainsi formées étant projetées à travers une lame semi-réfléchissante (appelée « combiner ») ou sur le pare-brise (appelé « windshield ») de sorte à former une image virtuelle visible par le conducteur au-delà du pare-brise. Dans des exemples non limitatifs, l'imageur utilise une technologie de type TFT (« Thin Film transistor » en anglais), laser scan, DLP (« Digital Light Processing »), ou encore Lcos (Liquid Crystal on Silicon »). Ainsi, dans ce premier mode de réalisation, l'imageur est adapté pour recevoir des informations acquises par les caméras latérales, de formater les informations vidéo des caméras en des signaux d'affichage appropriés, et de les projeter sur la lame semi-réfléchissante ou directement sur le pare-brise de sorte à créer l'image virtuelle 102.

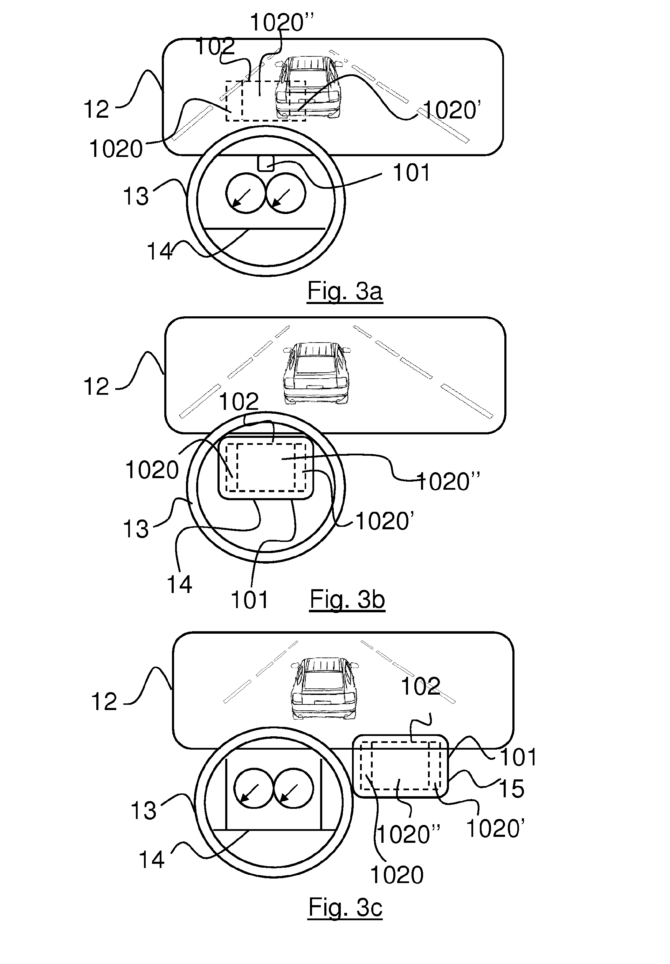

La **figure 3a** illustre le dispositif d'affichage d'images 101 selon le premier mode de réalisation dans lequel le dispositif d'affichage d'images 101 est un afficheur tête haute HUD. Sur cette figure sont également illustrés le pare-brise 12, le volant 13 et le tableau de bord 14 du véhicule automobile.

L'image virtuelle 102 (en pointillés sur la figure) comporte les zones d'affichage 1020, 1020' qui apparaissent donc au delà du pare-brise 12. L'image virtuelle 102 peut également comporter une zone centrale 1020" sur laquelle sont projetées des images acquises par une caméra arrière par exemple.

La **figure 3b** illustre le dispositif d'affichage d'images 101 selon un deuxième mode de réalisation non limitatif. Selon ce mode, le dispositif d'affichage d'images 101 est le tableau de bord 14 du véhicule automobile et l'image 102 produite par ledit dispositif 101 est une image réelle. Dans un exemple non limitatif, le tableau de bord 14 est un écran de type TFT. L'image réelle 102 est affichée sur l'écran TFT. On appelle une image réelle, une image qui n'est pas virtuelle.

Lorsque l'unité de contrôle d'affichage 103 agrandit les zones d'affichage 1020, 1020', on peut prévoir que dans un mode de réalisation non limitatif, l'unité de contrôle 103 diminue de façon simultanée la taille de la région centrale 1020" du tableau de bord 14 contenant les informations classiques de vitesse, de compte-tour, de jauge d'essence etc. Ce cas peut se présenter lorsque par exemple le conducteur gare son véhicule. Comme la vitesse est limitée, le conducteur n'a pas besoin de connaître sa vitesse pour se garer. Aussi, la région centrale 1020" du tableau de bord 14 peut être réduite de sorte à ne plus afficher la vitesse du véhicule et de sorte à laisser de la place pour l'affichage des informations Inf provenant des caméras latérales 11.

La **figure 3c** illustre le dispositif d'affichage d'images 101 selon un troisième mode de réalisation non limitatif. Selon ce mode, le dispositif d'affichage d'images 101 est un écran central 15 qui fait partie d'une console centrale et l'image 102 produite par ledit dispositif 101 est une image réelle. Cet écran central est de manière classique adaptée pour afficher des données GPS (« Global Positionning Systems ») et/ou des données multimédia (appelées en anglais « infotainment »). Dans un exemple non limitatif, l'écran central 15 est de type TFT. L'image réelle 102 est affichée sur l'écran TFT. Outre les deux zones d'affichage à taille reconfigurable 1020 et 1020', l'image réelle 102 comporte également une région centrale 1020" sur l'écran central 15 qui comporte notamment les données GPS et/ou multimédia.

Bien entendu, lorsque que les informations Inf ne sont plus nécessaires au conducteur du véhicule automobile, l'unité de contrôle d'affichage 103 diminue la taille de la (des) zone(s) d'affichage 1020, 1020' qui a été agrandie précédemment, suite à un deuxième événement prédéterminé E'.

Dans des modes de réalisation non limitatifs, ledit deuxième événement prédéterminé E' est :
- un ordre résultant de la position du regard E1', à savoir dans des exemples non limitatifs, le fait que le conducteur ne regarde plus à gauche ou à droite de l'image 102 (réelle ou virtuelle) ;
- une désactivation d'un interrupteur E2'. Dans un exemple non limitatif, la désactivation du bouton correspondant à (aux) la zone(s) d'affichage qui avait été agrandit ;
- une désactivation d'un clignotant du véhicule automobile (E4') ;
- un ordre vocal E5'. Dans un exemple non limitatif, l'ordre vocal peut être « diminuer caméra gauche et caméra droite » pour diminuer la taille des deux zones ;
- un temps prédéterminé E7' (appelé en anglais « timeout »). Ainsi, par exemple, après un changement de ligne, au bout d'un temps prédéterminé on rediminue la taille de la zone d'affichage 1020, 1020' qui a été agrandie.

Ainsi, grâce à la visualisation dynamique des informations provenant des caméras latérales 11, on garde suffisamment de place sur l'image 102 pour la visualisation des informations classiques concernant la vitesse du véhicule, le nombre de tours-minute, les informations multimédia etc. quand cela est nécessaire.

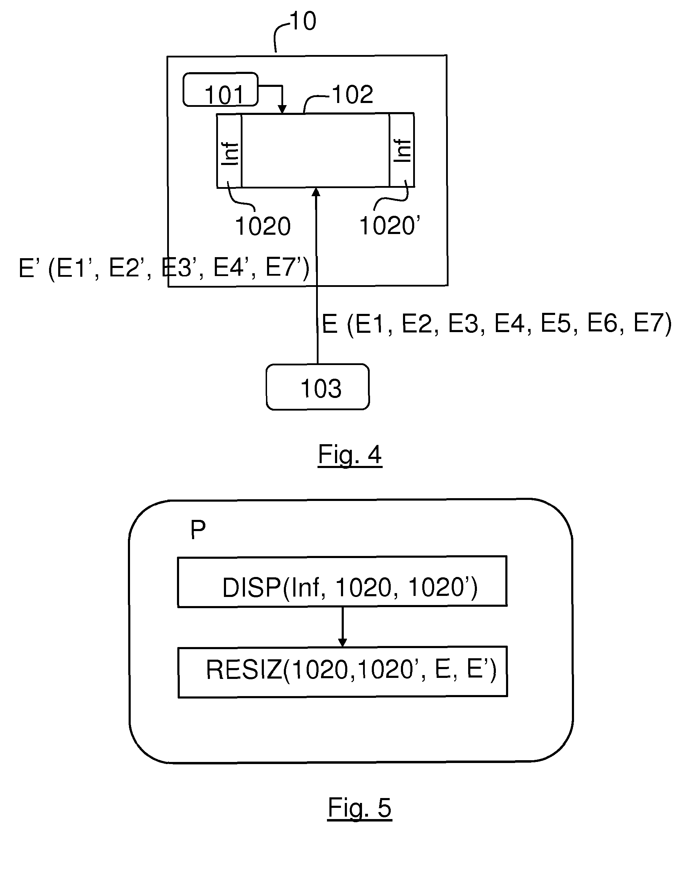

La **figure 4** illustre l'unité de contrôle 103 pour système d'affichage 10 pour véhicule automobile 1, ledit système d'affichage 10 comportant le dispositif d'affichage d'images 101 adapté pour produire une image 102 comportant au moins deux zones d'affichage 1020, 1020' de taille reconfigurable, lesdites zones d'affichage 1020, 1020' étant adaptées pour afficher tout ou partie des informations Inf provenant respectivement de deux caméras latérales 11 du véhicule automobile 1.

L'unité de contrôle 103 est adaptée pour reconfigurer la taille d'au moins une zone d'affichage 1020, 1020' en fonction d'un événement prédéterminé E, E'. En particulier, l'unité de contrôle 103 est adaptée pour :
- agrandir la taille d'au moins une zone d'affichage 1020, 1020' en fonction d'un premier événement prédéterminé E ;
- diminuer la taille d'au moins une zone d'affichage 1020, 1020' en fonction d'un deuxième événement prédéterminé E'.

Cette unité de contrôle d'affichage 103 est en outre adaptée pour recevoir les informations Inf provenant des caméras latérales et à les transmettre au dispositif d'affichage 101 pour que tout ou partie des informations soient affichées (informations tronquées, réduites en taille ou totales) sur les zones d'affichage 1020, 1020'.

L'unité de traitement 103 est en outre adaptée pour effectuer un traitement d'image à partir des caméras latérales pour détecter un objet sur au moins un des côtés (gauche et droite) du véhicule automobile 1.

Dans des modes de réalisation non limitatifs, ladite unité de contrôle 103 est intégrée dans une des caméras latérales 11 du véhicule automobile, dans ledit dispositif d'affichage d'images 101, ou est indépendant du système d'affichage 10. Dans l'exemple non limitatif de la **figure 4****,** l'unité 103 est autonome par rapport au système d'affichage 10.

Ainsi, le système d'affichage 10 décrit permet de mettre en oeuvre le procédé P illustré à la **figure 5****,** ledit procédé P comportant :
- l'affichage de tout ou partie des informations Inf provenant de deux caméras latérales 11, 12 du véhicule automobile 1 dans respectivement deux zones d'affichage 1020, 1020' de taille reconfigurable, lesdites zones d'affichage 1020, 1020' faisant partie d'une image 102 produite par un dispositif d'affichage d'images 101, l'affichage étant effectué au moyen du dispositif d'affichage d'images 101 (étape DISP(Inf, 1020, 1020') illustrée) ;
- la reconfiguration de la taille d'au moins une zone d'affichage 1020, 1020' en fonction d'un événement prédéterminé E, E', ladite reconfiguration étant effectuée au moyen de ladite unité de contrôle d'affichage 103 (étape RESIZ(1020,1020',E, E') illustrée).

Bien entendu la description de l'invention n'est pas limitée à l'application, aux modes de réalisation et aux exemples décrits ci-dessus.

Ainsi, dans d'autres modes de réalisation non limitatifs, un événement prédéterminé peut être défini par tout autre événement de conduite tel que le fait de ralentir la vitesse du véhicule pour se garer par exemple.

Ainsi, dans un autre mode de réalisation non limitatif, un événement prédéterminé peut être défini par tout autre système d'aide à la conduite permettant d'améliorer la sécurité du véhicule automobile et de ses passagers.

Ainsi, l'invention décrite présente notamment les avantages suivants :
- elle permet d'obtenir un système d'affichage optimisé en adaptant la taille de l'affichage des informations provenant des caméras latérales en fonction des besoins du conducteur du véhicule automobile et de la situation ;
- elle permet de gérer les informations de façon dynamique ;
- elle permet d'obtenir une gestion d'informations simple à mettre en oeuvre via des commandes vocales, manuelles, optiques etc. ;
- elle permet d'obtenir un système d'affichage ergonomique puisque ce système ne demande pas d'efforts de la part du conducteur pour modifier la taille des zones d'affichage ;
- elle permet d'obtenir un gain de place dans l'habitacle du véhicule puisqu'un unique écran est utilisé au lieu de trois écrans dans l'état de la technique antérieur. Le coût est également réduit ;
- grâce à l'affichage partiel initial des informations des caméras latérales, elle permet d'utiliser un écran réduit par rapport aux trois écrans de l'état de la technique antérieur ;
- elle permet de réduire la « pollution » visuelle issue des caméras latérales pour le conducteur du véhicule automobile lorsque ce dernier n'a pas besoin desdites informations. Le conducteur n'a en effet pas à visualiser continuellement des images en mouvement (lorsque le véhicule roule vite) correspondant à l'environnement extérieur sur les deux côtés du véhicule. Les informations correspondant auxdites images sont ainsi masquées partiellement ; et
- grâce à la taille reconfigurable et agrandissable d'une zone d'affichage, elle permet au conducteur de visualiser de façon simple plus de détails concernant les informations provenant des caméras latérales du véhicule automobile.

## Revendications

1. Système d'affichage (10) pour véhicule automobile (1) selon lequel ledit système d'affichage (10) comporte :
- un dispositif d'affichage d'images (101) adapté pour produire une image (102) comportant au moins deux zones d'affichage de taille reconfigurable (1020, 1020'), lesdites zones d'affichage (1020, 1020') étant adaptées pour afficher tout ou partie des informations (Inf) provenant respectivement de deux caméras latérales (11) du véhicule automobile (1) ;
- une unité de contrôle d'affichage (103) adaptée pour reconfigurer la taille d'au moins une zone d'affichage (1020, 1020') en fonction d'un événement prédéterminé (E, E').

2. Système d'affichage (10) selon la revendication 1, selon lequel suite à un premier événement prédéterminé (E), ladite unité de contrôle d'affichage (103) agrandit la taille d'au moins une zone d'affichage (1020, 1020').

3. Système d'affichage (10) selon la revendication 2, selon lequel un premier événement prédéterminé (E) est :
- un ordre résultant de la position du regard (E1) ; ou
- un déclenchement d'un interrupteur (E2) ; ou
- une détection d'un changement de ligne (E3) du véhicule automobile ; ou
- une activation d'un clignotant du véhicule automobile (E4) ;
- un ordre vocal (E5) ; ou
- une détection d'un objet sur au moins un coté du véhicule automobile (E6) ; ou
- un passage en marche arrière (E7) ;

4. Système d'affichage (10) selon l'une quelconque des revendications 1 à 3, selon lequel suite à un deuxième événement prédéterminé (E'), ladite unité de contrôle d'affichage (103) diminue la taille d'au moins une zone d'affichage (1020, 1020').

5. Système d'affichage (10) selon la revendication 4, selon lequel un deuxième événement prédéterminé (E') est :
- un ordre résultant de la position du regard (E1') ; ou
- une désactivation d'un interrupteur (E2') ; ou
- une désactivation d'un clignotant du véhicule automobile (E4') ;
- un ordre vocal (E5') ; ou
- un temps prédéterminé (E7').

6. Système d'affichage (10) selon l'une quelconque des revendications 1 à 5, selon lequel ledit dispositif d'affichage d'images (101) est :
- un afficheur tête haute (HUD) et ladite image produite (102) est une image virtuelle ; ou
- un tableau de bord (14) du véhicule automobile (1) et ladite image produite (102) est une image réelle ; ou
- un écran central (15) et ladite image produite(102) est une image réelle.

7. Système d'affichage (10) selon l'une quelconque des revendications 1 à 6, selon lequel ledit système d'affichage (10) comprend les caméras latérales (11) du véhicule automobile (1).

8. Unité de contrôle d'affichage (103) pour système d'affichage (10) pour véhicule automobile (1), ledit système d'affichage (10) comportant un dispositif d'affichage d'images (101) adapté pour produire une image (102) comportant au moins deux zones d'affichage (1020, 1020') de taille reconfigurable, lesdites zones d'affichage (1020, 1020') étant adaptées pour afficher tout ou partie des informations (Inf) provenant respectivement de deux caméras latérales (11) du véhicule automobile (1), selon laquelle ladite unité de contrôle d'affichage (103) est adaptée pour reconfigurer la taille d'au moins une zone d'affichage (1020, 1020') en fonction d'un événement prédéterminé (E, E').

9. Unité de contrôle d'affichage (103) selon la revendication 8, selon lequel ladite unité de contrôle d'affichage (103) est intégrée dans :
- ledit dispositif d'affichage d'images (101) ; ou
- une desdites caméras latérales (11).

10. Procédé d'affichage (P) pour véhicule automobile (1) selon lequel ledit procédé comporte :
- l'affichage de tout ou partie des informations (Inf) provenant de deux caméras latérales (11, 12) du véhicule automobile (1) dans respectivement deux zones d'affichage (1020, 1020') de taille reconfigurable, lesdites zones d'affichage (1020, 1020') faisant partie d'une image (102) produite par un dispositif d'affichage d'images (101) ;
- la reconfiguration de la taille d'au moins une zone d'affichage (1020, 1020') en fonction d'un événement prédéterminé (E, E').
